Europäisches Patentamt

European Patent Office

Office européen des brevets

(19)

(11) EP 0 642 125 B1

# EUROPEAN PATENT SPECIFICATION

(12)

(45) Date of publication and mention
of the grant of the patent:
**20.10.1999 Bulletin 1999/42**

(51) Int Cl.$^6$: **G11B 11/10**

(21) Application number: **94202218.7**

(22) Date of filing: **29.07.1994**

(54) **Magneto-optical recording medium**

Magnetooptisches Aufzeichnungsmedium

Support d'enregistrement magnéto-optique

(84) Designated Contracting States:
**DE FR GB IT NL**

(30) Priority: **04.08.1993 EP 93202295**

(43) Date of publication of application:
**08.03.1995 Bulletin 1995/10**

(73) Proprietor: **Koninklijke Philips Electronics N.V.**
**5621 BA Eindhoven (NL)**

(72) Inventors:
  • **van Kesteren,Hans Willem**
    **c/o Int.Octrooibureau B.V**
    **NL-5656 AA Eindhoven (NL)**
  • **Mud,Auke-Jan c/o Inter.Octrooibureau B.V.**
    **NL-5656 AA Eindhoven (NL)**
  • **Kerkhof,Johannes Martinus**
    **c/o Inter.Octrooibureau**
    **NL-5656 AA Eindhoven (NL)**

(74) Representative: **Stolk, Steven Adolph et al**
**INTERNATIONAAL OCTROOIBUREAU B.V.,**
**Prof. Holstlaan 6**
**5656 AA Eindhoven (NL)**

(56) References cited:
**EP-A- 0 304 873          EP-A- 0 498 440**
**WO-A-94/02940**

• **JOURNAL OF MAGNETISM AND MAGNETIC**
  **MATERIALS, vol.116, 1992 pages L315 - L319**
  **P.J.H. BLOEMEN ET AL. 'Antiferromagnetic**
  **coupling between Co/Ni multilayers with**
  **perpendicular magnetization across MBE-grown**
  **Cu(111)layers'**
• **IBM TECHNICAL DISCLOSURE BULLETIN.,**
  **vol.34, no.73, December 1991, NEW YORK US**
  **pages 6 - 7 'Large perpendicular magnetic**
  **anisotropy in Co/Ru multilayered structures'**
• **JAPANESE JOURNAL OF APPLIED PHYSICS,**
  **vol.31, no.2B, February 1992, TOKYO JP K.**
  **YUSU ET AL. 'Kerr enhancement by layer**
  **modulation in Co/Pt multilayers'**

## Description

The invention relates to a magneto-optical recording medium comprising a substrate and a recording multilayer, the recording multilayer having a magnetic easy axis perpendicular to the multilayer and comprising layers of a first kind alternately stacked with layers of a second kind, the layers of the first kind being substantially comprising Co and the layers of the second kind comprising a metal other than Co, whereby successive layers of the first kind are ferromagnetically coupled across interposed layers of the second kind, that at least one of the layers of the second kind which is bounded on both sides by layers of the first kind being substituted by a coupling structure comprising at least one layer of antiferromagnetic coupling material, across which coupling structure the immediately adjacent layers of the first kind are antiferromagnetically coupled.

In a magneto-optical recording medium having a recording multilayer with perpendicular magnetic anisotropy, individual data bits are represented by domains which are magnetised in one of the two different orientations perpendicular to the multilayer. Such data bits can be detected via magneto-optical effects, whereby the polarisation state of polarised light incident on the multilayer (e.g. from a laser) is changed in a manner which depends on the direction and magnitude of the magnetisation in that part of the multilayer impinged upon by the light. Such changes in polarisation state can be monitored in the light reflected from the multilayer (Kerr effect) or in the light transmitted through the multilayer (Faraday effect).

The magnetised domains can be obtained by using a focused laser light beam to locally heat the recording multilayer to a temperature near the Curie temperature of the recording multilayer material. When the region of the recording multilayer thus heated is allowed to cool in an external magnetic field, the magnetisation in that region will align and lodge itself in the direction of that magnetic field. This procedure is referred to as thermomagnetic writing. A common means of thermomagnetically writing information in a recording multilayer is one whereby the recording medium is embodied in the form of a disc which rotates about an axis perpendicular to its plane, the data bits being written in the recording multilayer using a permanent external magnetic field and a radially moveable focused laser light beam whose intensity is pulsed in accordance with the information to be written. Use of this means necessitates prior erasure of existing information in that region of the recording multilayer where the new information is to be written.

A known means of directly writing new information over existing information (so-called direct overwrite) employs a technique referred to as magnetic field modulation (MFM), whereby the intensity of the radially moveable focused laser light beam is constant and the direction of the external magnetic field is modulated in accordance with the information to be written, the magnetic field being supplied by an electromagnetic coil. However, a disadvantage of MFM is that, at high writing frequencies, the current in the electromagnetic coil must be switched very rapidly, and the required switching power is thus high. Another disadvantage of MFM is that, if it is employed with double-sided recording media which are protected on both faces by a glass or plastic plate, the presence of the plate increases the distance from the electromagnetic coil to the recording multilayer, thus reducing the on-site magnetic field strength in the recording multilayer, thereby necessitating a larger electrical current in the coil in order to counteract this effect. Application of MFM in compact devices with relatively small power supplies, such as "disc-man" players and portable computers, can thus be problematic.

A magneto-optical recording medium comprising a substrate and a recording multilayer, the recording multilayer having a magnetic easy axis perpendicular to the multilayer and comprising layers of a first kind alternately stacked with layers of a second kind, the layers of the first kind being principally comprised of Co and the layers of the second kind comprising a metal other than Co, whereby successive layers of the first kind are ferromagnetically coupled across interposed layers of the second kind is known from European Patent Specification EP-B-304873. The recording multilayer therein consists of layers of Co alternately stacked with non-magnetic layers comprising a metal selected from the group formed by Pt and Pd. Important properties of such a recording multilayer are its saturation magnetisation, Curie temperature coercive field, nucleation field, remanence, and magneto-optical Kerr effect. These properties can be influenced in a number of ways, such as variation of the thicknesses of the Co layers and the non-magnetic layers, variation of the total number of constituent layers in the recording multilayer, or variation of the technique used to create the recording multilayer. Specific combinations of these variable parameters have been shown to yield recording multilayers which have concurrent desirable properties such as a relatively large magneto-optical Kerr effect, 100% remanence, and a ratio of the values of the coercive field and nucleation field which results in a so-called "square" magnetic hysteresis loop.

However, a limitation of this known recording medium concerns its maximum density of information storage. When light of wavelength $\lambda$ is focused into a spot by a lens, diffraction effects place a fundamental lower limit on the width of the spot obtained. For a circular lens of diameter A and focal length f, the focused light forms a diffraction pattern consisting of a central bright disc (so-called Airy disc) surrounded by concentric dark and bright circular rings. The diameter $\delta$ of this Airy disc is given by the formula:

$$\delta = 1.22\,\lambda\left(\frac{f}{\Delta}\right) \qquad\qquad (1)$$

This is the minimum width of the light spot formed on the recording medium by a focused light beam. Because magneto-optical effects monitored in the reflected or transmitted light will be proportional to the net magnetisation value for this entire spot, it is evident that the width of the individual magnetised domains representing stored data bits will have a practical lower limit given by Equation (1). This limits the maximum density of information storage of the recording medium.

In order to obtain a so-called super-resolution magneto-optical recording medium, in which the maximum storage density is considerably higher than in the recording medium of said European patent specification, and to provide a magneto-optical recording medium into which data bits can be written according to a simple direct overwrite procedure which does not involve magnetic field modulation, it is already proposed to substitute at least one of the layers of the second kind which is bounded on both sides by layers of the first kind being substituted by a coupling structure comprising at least one layer of antiferromagnetic coupling material, across which coupling structure the immediately adjacent layers of the first kind are antiferromagnetically coupled. See: Journal of magnetism and magnetic materials, Vol. 116 (1992), pp. L315-L319; P.J.H. Bloemen et al, Antiferromagnetic coupling between Co/Ni multilayers with perpendicular magnetisation across MBE-grown Cu(111) layers.

A great advantage of such a magneto-optical recording medium is that, in general, the temperature dependence of the antiferromagnetic (AF) coupling across the coupling structure will be different to the temperature dependence of the magnetisation in the rest of the recording multilayer. This difference in temperature dependencies can be finely controlled and manipulated by proper adjustment of various parameters, including the thicknesses and chemical composition of the layers of the first and second kind, the constitution and chemical composition of the coupling structure, the means by which the various layers are deposited (e.g. vapour deposition or sputter deposition), and the conditions under which deposition takes place (e.g. choice of sputter gas).

The substitution of one of the layers of the second kind by an antiferromagnetic coupling structure is based upon the insight that the concurrent presence of ferromagnetic and antiferromagnetic coupling, together with the different temperature dependencies of the AF coupling and magnetisation, can be exploited to produce a recording medium employing mechanisms for data recording and data reading which are different to those employed in the known recording medium.

It should be observed that there is another class of magneto-optical recording media in which coupling of various layers is exploited to allow super-resolution data storage and direct overwrite recording. These media, which demonstrate perpendicular magnetic anisotropy, employ amorphous alloys of rare earth (RE) elements and transition metal (TM) elements, as described for example in United Kingdom Patent Application GB-A-2077065. Such RE-TM alloy media generally comprise at least two relatively thick RE-TM alloy layers, stacked directly on top of one another. Commonly used RE-TM alloys include TbFeCo and GdTbFe, and typical layer thichnesses are of the order of 100 nm. Each of the alloy layers is ferromagnetic, and the degree of ferromagnetism is controlled by the exact compositions of the RE-TM alloys. In common embodiments, these compositions, are thus chosen that the two layers are directly AF coupled. However, because this AF coupling is not mediated by an interposed coupling structure, there is comparatively little scope for independent adjustment of the temperature dependencies of the AF coupling and magnetisation, since both quantities are controlled by only one parameter, namely the RE-TM alloy composition. Controlled adjustment of temperature dependencies is important for the realisation of optimised practical embodiments of the magneto-optical recording medium according to the invention, as will become evident from discussion of the embodiments hereafter.

The known RE-TM alloy media have a number of additional disadvantages. First, unlike the magneto-optical recording media according to the invention, they are very sensitive to corrosion and oxidation, which can gradually change their magnetic and magneto-optical properties. Secondly, to minimise the effects of such oxidation, each RE-TM layer is made relatively thick (circa 100 nm). In this way, the proportion of unoxidised material in the bulk of the layer is relatively large in relation to the proportion of oxidised material at the surfaces of the layer, thus effectively minimising the effects of oxidation. However, heating thick layers requires a larger (laser) light intensity than heating thin layers, so that this measure increases the power required to write data into the medium. Thirdly, in manufacturing processes, it is relatively difficult to accurately maintain a critical RE-TM alloy composition combining the required values of the coercive field, nucleation field, magnetisation, remanence, magneto-optical Kerr effects, Curie temperature and AF coupling strength.

The purpose of the invention is to further improve the magneto-optical recording medium and to provide such a recording medium which is particularly suitable for so-called super-resolution data storage. Therefore, in accordance with the invention, the magneto-optical recording medium, as described in the opening paragraph is characterised that the embodiment of that part $P_1$ of the recording multilayer at one side of the coupling structure, and of that part $P_2$ of the recording multilayer at the other side of the coupling structure, is such that a first magnetic switching field $H_{S1}$ being applied under thermally weakend antiferromagnetic coupling, for switching magnetisations in part $P_1$ out of anti-parallel orientation with respect to corresponding magnetisations in part $P_2$ and into parallel orientation with respect thereto, is lower than a second magnetic switching field $H_{S2}$, for switching magnetisations in part $P_2$ out of anti-parallel orientation with respect to corresponding magnetisations in part $P_1$ and into parallel orientation with respect thereto. This stipulation can be expressed in formula form as follows:

$$H_{S1} < H_{S2} \tag{2}$$

The term "corresponding magnetisations in part $P_2$" is intended to denote those magnetisations in part $P_2$ which are located within the same data bit domain as the relevant magnetisations in part $P_1$, and vice versa. If AF coupling strength across the coupling structure is denoted by J, magnetic permeability of vacuum is denoted by $\mu_0$, saturation magnetisation of a given part is denoted by $M_S$, cumulative ferromagnetic layer thickness of a given part is denoted by t, and coercive field of a given part is denoted by $H_c$, then the following equations can be derived <u>in SI units</u>:

$$H_{S1} = \left( \frac{-2J}{\mu_0 M_S t} + H_c \right)_1 \tag{3}$$

$$H_{S2} = \left( \frac{-2J}{\mu_0 M_S t} + H_c \right)_2 \tag{4}$$

whereby it is assumed that J is negative for AF coupling. In each of these equations, the expression between parentheses is intended to be evaluated for that part of the recording multilayer which is indicated by the particular subscript outside those parentheses, whereby the subscript "1" refers to part $P_1$ the subscript "2" refers to part $P_2$.

It is of additional advantage in this case when the parts $P_1$ and $P_2$ are thus embodied, by suitable choice of parameters as already discussed, that the following conditions are met:

(i) A third magnetic switching field Hs3, for switching magnetisations in part $P_1$ out of parallel orientation with respect to corresponding magnetisations in part $P_2$ and into anti-parallel orientation with respect thereto, is larger than a fourth magnetic switching field $H_{S4}$, for switching magnetisations in part $P_2$ out of parallel orientation with respect to corresponding magnetisations in part $P_1$ and into anti-parallel orientation with respect thereto. This stipulation can be expressed in formula form as follows:

$$H_{S3} > H_{S4} \tag{5}$$

Using the notation and sign convention introduced above, the following equations can be derived <u>in SI units</u>:

$$H_{S3} = \left( \frac{-2J}{\mu_0 M_S t} - H_c \right)_1 \tag{6}$$

$$H_{S4} = \left( \frac{-2J}{\mu_0 M_S t} - H_c \right)_2 \tag{7}$$

In each of these equations, the expression between parentheses is intended to be evaluated for that part of the recording multilayer which is indicated by the particular subscript outside those parentheses, whereby the subscript "1" refers to part $P_1$ and the subscript "2" refers to part $P_2$.

(ii) In the absence of an external magnetic field, the only stable magnetisation configurations in parts $P_1$ and $P_2$ are those whereby magnetisations in part $P_1$ are oppositely oriented to corresponding magnetisations in part $P_2$. This requires that:

$$H_{S3} > 0 \hspace{6cm} (8)$$

(iii) The temperature dependence of the AF coupling strength is stronger than that of the magnetisation in either of the parts $P_1$ or $P_2$, i.e. the decrease of J with increasing temperature is stronger than the corresponding decrease of the magnetisation in either part of the recording multilayer.

(iv) The Curie temperature $T_{c2}$ of part $P_2$ is higher than the Curie temperature $T_{c1}$, of part $P_1$.

(v) The (laser) light beam employed in writing data to and reading data from the recording medium enters the recording multilayer via part $P_1$, and then impinges on part $P_2$.

Since the intensity of a light beam incident on such a recording multilayer through the part $P_1$ (for example) demonstrates an exponential decay as a function of the penetration depth into the medium, the individual magneto-optical contributions of the successively encountered layers to the total magneto-optical effect from the entire recording multilayer will thus diminish as a function of penetration depth. However, adjustment of the absolute magneto-optical effect of part $P_2$ to be larger than that of part $P_1$ counteracts this effect, and, for a chosen wavelength of light, sufficiently accurate choice of chemical composition, deposition conditions, layer thicknesses and numbers of repetitions in the two parts will ensure an almost perfect counteraction, whereby the magnitude of the relative magneto-optical contribution from part $P_2$ will equal that from part P1, as seen from the side of P1 remote from the coupling structure. Since parts P2 and P1 are located at opposite sides of the coupling structure across which the immediately adjacent layers of the first kind are antiferromagnetically coupled, and since, within each part, the layers of the first kind are ferromagnetically coupled to one another, it follows that part P2 as a whole can be antiferromagnetically coupled to part P1 as a whole. This antiferromagnetic coupling will cause the sign of the magneto-optical effect from part P2 to be opposite to that from part P1. Since the magnitudes of the relative magneto-optical contributions from the two parts are equal (for the chosen wavelength of light), it follows that the total net magneto-optical effect from the recording multilayer will therefore be zero, as seen from the side of P1 remote from the coupling structure.

If the coupling structure is locally heated using a focused (laser) light beam of the chosen wavelength, the strength of the AF coupling across the region of the coupling structure thus heated will diminish. If the intensity of the light beam is such that the temperature within the heated region remains below the Curie temperatures of the parts P1 and P2, then the AF coupling can be weakened without substantially weakening the magnetisation of these individual parts. Due to the validity of Formula (2), an external magnetic field (the so-called reading field), which is weaker than $H_{s1}$ at room temperature, can then be employed to overwhelm any remaining AF coupling and force the magnetisations in part $P_1$ to become parallel to the magnetic field, whilst leaving those in part $P_2$ unchanged. In this way, the net magneto-optical effect from the recording multilayer will become non-zero for domains in which the magnetisation in part $P_2$ was already parallel to the external magnetic field. In addition to its dependence on the chemical composition of the recording multilayer, the thermal behaviour of the AF coupling is dependent on the microstructure of the coupling structure, and this microstructure is in turn dependent on the means used to deposit the coupling structure (such as sputtering deposition or vacuum vapour deposition) and on the conditions under which deposition takes place (such as the choice of sputter gas). With a suitable choice of chemical composition and deposition conditions, and appropriate choice of the intensity of the focused light beam, one can thus exploit the Gaussian distribution of intensity within the Airy disc of the focused light beam to guarantee that, in relation to the fixed magnitude of the reading field, sufficient thermal weakening of the AF coupling across the coupling structure only occurs in a small central region of the Airy disc. Outside this small central region, corresponding magnetisations in parts $P_1$ and $P_2$ remain oppositely oriented, since remaining AF coupling cannot be overwhelmed by the fixed reading field, and the net magneto-optical effect will thus be zero. The size of the spot from which a magneto-optical effect is obtained is therefore smaller than the Airy disc.

Data bits can be written into such a recording multilayer in a manner which resembles that used to write data bits into the known recording medium. For example, using a focused light beam, part $P_2$ at least is locally heated to a temperature near its Curie temperature. By carefully choosing the intensity of the light beam, the Gaussian distribution of intensity within the Airy disc of the focused light spot can be exploited to ensure that only a small central region of the Airy disc is heated to a temperature near this Curie temperature. Using an external magnetic field, the magnetisation in part $P_2$ within the heated region is forced into a direction parallel to the magnetic field, being one of two orientations perpendicular to the plane of the medium. Cooling the heated region allows the magnetisation in part $P_1$ of the same region to adopt an anti-parallel orientation with respect to the locked magnetisation in part $P_2$ of that region, as AF coupling across the coupling structure strengthens. In this way, the individual magnetisations in part $P_1$ each correspond to oppositely directed magnetisations in part $P_2$, so that the total summed magneto-optical contribution of the combined parts is zero. However, the individual magnetisations in part $P_2$ still represent data bits, by virtue of their individual orientations. The size of each data bit is smaller than the Airy disc of the employed light beam, thus yielding a maximum density of information storage which exceeds that of the known recording medium, in accordance with one of the stated objects of the invention.

Data bits which have been written into such a recording multilayer can be read therefrom by virtue of the principle introduced in the penultimate previous paragraph. Once the AF coupling between parts $P_1$ and $P_2$ has been thermally weakened by a light beam of the chosen wavelength, an external magnetic field of accurately chosen magnitude can be employed to force the individual magnetisations in part $P_1$ into a single orientation parallel to the field, whilst leaving the orientations of the magnetisations in part $P_2$ unchanged. This selective manipulation of magnetisations is made possible by the validity of Formula (2) for the embodiment in question. Magnetisations in part $P_1$ will align themselves in the same direction as the external magnetic field, whereas the magnetisations in part $P_2$ will retain their initial orientation. If, within a given single data bit domain of the recording medium, the magnetisations in part $P_2$ happen to have the same orientation as the external magnetic field, then all magnetisations within that data bit domain will be parallel, giving a non-zero magneto-optical effect. If, however, the magnetisations in part $P_2$ of that data bit domain happen to have an orientation opposite to that of the external magnetic field, then, since the magnetisations in part $P_1$ of the same region have the same orientation as the magnetic field, the total summed magneto-optical effect from that region will be zero. In this way, using an external magnetic field of fixed direction and accurately chosen magnitude, it is possible to unambiguously distinguish between data bits represented by each of the two possible orientations of the magnetisations in part $P_2$.

A preferred rendition of the magneto-optical recording medium according to the invention, particularly suitable for direct overwrite recording without the use of magnetic field modulation, is characterised in that parts $P_1$ and $P_2$ of the recording multilayer are thus embodied that

$H_{S1} < H_{S2}$, and that the following two relationships hold:

$$H_{S3} < 0 \qquad\qquad (9)$$

$$T_{c1} > T_{c2} \qquad\qquad (10)$$

It is of additional advantage in this case when the parts $P_1$ and $P_2$ are thus embodied, by suitable choice of parameters as already discussed, that the following conditions are met:

(I) Formula (5) is valid, i.e. $H_{S3} > H_{S4}$.
(II) The AF coupling across the coupling structure demonstrates a relatively weak temperature dependence.
(III) The (laser) light beam employed in writing data to the recording medium enters the recording multilayer via part $P_2$, and then impinges on part $P_1$.

A direct overwrite method which does not involve MFM and which can be employed with such an embodiment of the magneto-optical recording medium according to the invention will now be elucidated. The method employs two oppositely oriented external magnetic fields, and a (laser) light beam whose intensity is modulated according to the data to be written. One of the external magnetic fields, called the initialising field ($H_1$) can be activated so as to force all magnetisations in part $P_1$ of a given region of the recording multilayer into a single lasting orientation, without assistance from the light beam and without changing the orientation of magnetisations in part $P_2$ of that region. This selective manipulation of magnetisations (the so-called initialisation process) is made possible by the validity of Formula (2) for this embodiment, and the stability of the initialised magnetisation state is due to the validity of Formula (9). Subsequently, the second external magnetic field, called the bias field (HB), is used in conjunction with the modulated light beam to write the new data bits in that same region of the recording multilayer, now initialised. The essence of this writing procedure, within a given data bit domain of the region in question, is as follows:

(A) Thermomagnetic orientation of magnetisations in part $P_2$ to be anti-parallel to the corresponding initialised magnetisations in part $P_1$ requires a relatively <u>low</u> (laser) light intensity. Thanks to the validity of Formula (10) for this embodiment, this first light intensity can be chosen so as to thermally demagnetise part $P_2$ to a greater extent than part $P_1$. As the heated domain is subsequently allowed to cool, the AF coupling locks the thermally weakened magnetisations in part $P_2$ into an anti-parallel orientation with respect to the (less-weakened) initialised magnetisations in part $P_1$.
(B) Thermomagnetic reversal of initialised magnetisations in part $P_1$, with attendant anti-parallel aligning of the corresponding magnetisations in part $P_2$, requires a <u>higher</u> (laser) light intensity than is necessary in case (A), since Formula (10) now requires the domain to be heated to a higher temperature than in case (A). Once the magnetisations in part PI have been thermally weakened to the required extent, the domain is allowed to cool. The

magnetisations in part $P_1$ will then first lock themselves parallel to HB, and the magnetisations in part $P_2$ will later align themselves anti-parallel to the magnetisations in part $P_1$, due to the AF coupling.

This embodiment of the magneto-optical recording medium, suitable for direct overwrite recording, can also be used for super-resolution data storage, since supplementary condition (v) for super-resolution (stated above) is not essential. In this case, supplementary condition (ii) for super-resolution (stated above) must be abandoned, since it is at variance with Formula (9), whence two initialising magnetic fields are required instead of one.

In the magneto-optical recording medium according to the invention, the layers of the first kind may contain extra materials in addition to pure Co. These extra materials can serve to alter the physical or chemical properties of the layers in which they are incorporated, or to influence the properties of neighbouring layers. For example, it can be shown that incorporation of 3-8 at.% Os or Re into the Co layers of the recording medium according to the invention causes a lowering of the Curie temperature and magnetisation of those layers. Similar effects can be achieved when the Co layers contain minority W, Nb, Ta or Mo substituents. Alternatively, the layers of the first kind can comprise a CoNi alloy which is principally comprised of Co, e.g. a Co60Ni40 alloy. It is stressed that the invention does not require all the layers of either the first kind or the second kind to have identical compositions or thicknesses, or to be provided by the same means. For example, the layers of the first kind at one side of the coupling structure may have different compositions add-thicknesses to the layers of the first kind at the other side of the coupling structure. Additionally, consecutive layers of the second kind may comprise different materials, and have different thicknesses, and be deposited by different means or under different conditions.

A preferential embodiment of the magneto-optical recording medium according to the invention is characterised in that the antiferromagnetic coupling material is selected from the group formed by V, Cr, Mn, Cu, Nb, Mo, Ru, Rh, Ta, W, Re, Os, Ir, and mixtures thereof. When interposed between Co layers in a multilayer, an appropriately thick layer comprising one of these materials has been found to induce strong AF coupling of the Co layers immediately adjacent to it. In addition, it has been observed that the strength and sign of the coupling across an interposed layer comprising one of these materials demonstrates an oscillatory dependence on the thickness of that layer, thus allowing the strength of the AF coupling to be tailored to the desired performance and requirements of a particular multilayer via careful choice of the thickness of the layer of antiferromagnetic coupling material.

A particularly advantageous embodiment of the magneto-optical recording medium according to the invention is characterised in that the coupling structure is a single layer of antiferromagnetic coupling material selected from the group formed by Rh, Ru, and mixtures thereof, which layer has a thickness in the range 0.5 nm - 1.2 nm. Of the elements V, Cr, Mn, Cu, Nb, Mo, Ru, Rh, Ta, W, Re, Os and Ir listed above, Rh demonstrates the largest AF coupling strength, and Ru demonstrates the second largest AF coupling strength. The magnitude and sign of the coupling across these two materials oscillates as a function of the Rh or Ru layer thickness, demonstrating a peak at approximately 0.8 nm. Above 1.2 nm, the coupling begins to demonstrate a ferromagnetic character. Below 0.5 nm, the coupling becomes weakly antiferromagnetic, or ferromagnetic.

Another preferential embodiment of the magneto-optical recording medium according to the invention is characterised in that the coupling structure further contains at least one layer of ferromagnetic material selected from the group formed by Fe, Ni, Co, and mixtures thereof. As already stated, the presence of an interposed coupling structure according to the invention advantageously facilitates adjustment of the temperature dependence and effective strength of the AF coupling in the recording multilayer. Such temperature dependence and effective strength can be influenced not only by the choice of chemical composition and thickness of the layer of antiferromagnetic coupling material, but also by the presence of at least one layer of ferromagnetic material in the coupling structure, the thickness of which also influences the aforementioned temperature dependence and effective strength.

In addition to the layer of antiferromagnetic coupling material, and any optionally present ferromagnetic material, the coupling structure can also contain layers of other materials, which are, for example, incorporated in the structure so as influence its magnetic, magneto-optical, optical, thermal or chemical properties, or solely for the purpose of adjusting the thickness of the coupling structure so as to influence the strength of the AF coupling across it or the penetration depth of light within it. Examples of such other materials are Pd, Pt, Au, and mixtures thereof.

Possible embodiments of the coupling structure in a magneto-optical recording medium according to the invention therefore include:

(a) a single Rh layer sandwiched between two Ni layers, or
(b) a single Fe layer sandwiched between a Pd layer on one side and a Ru layer on the other side, or
(c) a single Fe layer sandwiched between a Rh layer on one side and a Ru layer on the other side, or
(d) a stack of five layers, each containing a given element, namely Pd, Fe, Ru, Ni and Pt, consecutively, for specific thickness ranges of the various layers.

This list of four possible embodiments is given by way of example only, and is obviously not exhaustive.

A further advantageous embodiment of the magneto-optical recording medium according to the invention is characterised in that the layers of the second kind contain a material selected from the group formed by Ni, Pd, Pt, Au, and mixtures thereof. Experiment has demonstrated that Co/Ni, Co/Pd, Co/Pt and Co/Au interfaces all demonstrate particularly large positive surface anisotropies (i.e. strong perpendicular magnetisation). Attractive magneto-optical recording properties of multilayers in which layers of Co are alternately stacked with layers of Ni are discussed at length by den Broeder et al. in Appl. Phys. Lett. 61 (12), pages 1468-1470 (1992). In the case of multilayers combining Co layers with interposed Pd or Pt layers, advantageous magneto-optical recording properties are summarised by Zeper et al. in J. Appl. Phys. 70 (4), pages 2264-2271 (1991). A particular advantage in the case of such Co/Pd and Co/Pt multilayers is that the magnitudes of their magneto-optical Kerr effects increase with decreasing wavelength, making these multilayered materials particularly suitable for recording at short optical wavelengths (blue light), at which wavelengths the maximum density of information storage is higher than at commonly employed red wavelengths (see Equation (1)). In the case of Co/Pt interfaces, experiment has shown that the Pt layer becomes magnetically polarised by the Co layer in such a manner that the total magneto-optical Kerr effect of the combined layers substantially exceeds that of the Co layer alone. In contrast, the magneto-optical Kerr effect of Co/Au layered structures is relatively small, and this property is of virtue when it is desired that a given part of the recording multilayer should demonstrate a smaller magneto-optical Kerr effect than another given part thereof, as will be discussed hereafter.

Practical and advantageous materials from which the substrate can be manufactured include glass, quartz, and synthetic resins such as polymethylmethacrylate and polycarbonate. Apart from the substrate and recording multilayer, the recording medium can also comprise additional layers which improve the performance of the assistance from the light beam and without changing the orientation of magnetisations in part $P_2$ of that region. This selective manipulation of magnetisations (the so-called initialisation process) is made possible by the validity of Formula (2) for this embodiment, and the stability of the initialised magnetisation state is due to the validity of Formula (9). Subsequently, the second external magnetic field, called the bias field ($H_B$), is used in conjunction with the modulated light beam to write the new data bits in that same region of the recording multilayer, now initialised. The essence of this writing procedure, within a given data bit domain of the region in question, is as follows:

(A) Thermomagnetic orientation of magnetisations in part $P_2$ to be anti-parallel to the corresponding initialised magnetisations in part $P_1$ requires a relatively low (laser) light intensity. Thanks to the validity of Formula (10) for this embodiment, this first light intensity can be chosen so as to thermally demagnetise part $P_2$ to a greater extent than part $P_1$. As the heated domain is subsequently allowed to cool, the AF coupling locks the thermally weakened magnetisations in part $P_2$ into an anti-parallel orientation with respect to the (less-weakened) initialised magnetisations in part $P_1$.

(B) Thermomagnetic reversal of initialised magnetisations in part $P_1$, with attendant anti-parallel aligning of the corresponding magnetisations in part $P_2$, requires a higher (laser) light intensity than is necessary in case (A), since Formula (10) now requires the domain to be heated to a higher temperature than in case (A). Once the magnetisations in part $P_1$ have been thermally weakened to the required extent, the domain is allowed to cool. The magnetisations in part $P_1$ will then first lock themselves parallel to $H_B$, and the magnetisations in part $P_2$ will later align themselves anti-parallel to the magnetisations in part $P_1$, due to the AF coupling.

This embodiment of the magneto-optical recording medium, suitable for direct overwrite recording, can also be used for super-resolution data storage, since supplementary condition (v) for super-resolution (stated above) is not essential. In this case, supplementary condition (ii) for super-resolution (stated above) must be abandoned, since it is at variance with Formula (9), whence two initialising magnetic fields are required instead of one.

Practical and advantageous materials from which the substrate can be manufactured include glass, quartz, and synthetic resins such as polymethylmethacrylate and polycarbonate. Apart from the substrate and recording multilayer, the recording medium can also comprise additional layers which improve the performance of the recording medium as a whole. Examples of such additional layers are:

- A photo-polymerised layer of, for example, a UV-cured photolacquer. Such a layer can, for example, be deposited directly on the substrate, and can be provided during curing with a servo track (guide groove) along which individual data bits can be written. An advantageous form for this servo track is a spiral curve which winds gradually outward from the centre of a circular disc. In the case of a substrate manufactured from a synthetic resin, a guide track can be provided directly in the substrate itself;
- A dielectric enhancement layer of a material such as AlN or $Si_3N_4$. Such a layer serves to artificially enhance the Kerr rotation of the recording multilayer;
- A reflector layer of a highly reflective metal such as Au, Ag, Al or Cu. The presence of such a layer can improve the overall reflectivity of the recording medium with respect to the light beam employed to read data bits therefrom;
- A protective layer of, for example, a spin-coated UV-cured photolacquer.

The invention and its attendant advantages will be further elucidated with the aid of embodiments and the accompanying drawings, whereby:

Figure 1 is a schematic representation of part of a cross section of a particular magneto-optical recording medium according to the invention;

Figure 2 shows a magnetic hysteresis loop measured at room temperature and at a wavelength of 633 nm for the particular embodiment of the magneto-optical recording medium depicted in Figure 1;

Figure 3 depicts a magnetic hysteresis loop measured at room temperature and at a wavelength of 820 nm for a particular embodiment of the magneto-optical recording medium according to the invention, in which embodiment the coupling structure is a stack of five layers, each containing a given element, namely Pt, Fe, Ru, Fe, Pt, consecutively;

Figure 4 is a schematic depiction of a direct overwrite principle which can be employed with a particular embodiment of the magneto-optical recording medium according to the invention.

Embodiment 1

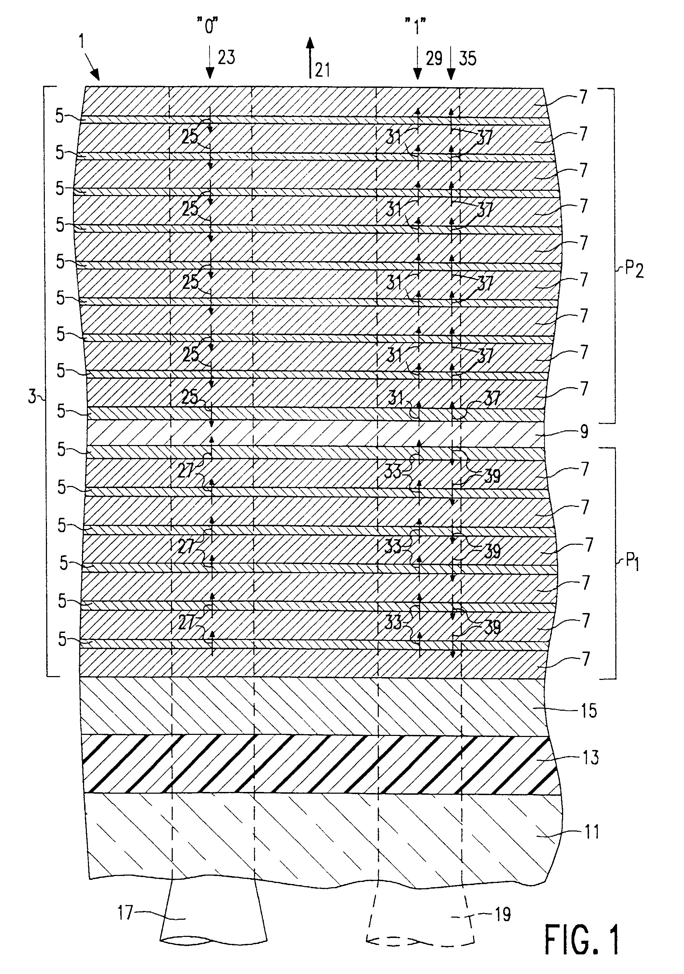

Figure 1 is a schematic representation of part of a cross section of a particular magneto-optical recording medium 1 according to the invention.

The figure depicts a recording multilayer 3 comprising an alternating stack of layers of a first kind 5 and layers of a second kind 7, in which a coupling structure 9 is substituted for one of the layers of the second kind 7. The coupling structure 9 comprises a Ru layer of thickness 0.9 nm, and divides the recording multilayer 3 into two parts $P_1$ and $P_2$. In both parts $P_1$ and $P_2$, the layers of the first kind 5 comprise Co, and the layers of the second kind 7 comprise Pt. In part $P_1$, the Co layer 5 immediately adjacent to the Ru layer 9 has a thickness of 0.45 nm, each of the remaining five Co layers 5 has a thickness of 0.31 nm, and each of the six Pt layers 7 has a thickness of 1.0 nm. In part $P_2$, the Co layer 5 immediately adjacent to the Ru layer 9 has a thickness of 0.45 nm, each of the remaining eight Co layers 5 has a thickness of 0.26 nm, and each of the nine Pt layers 7 has a thickness of 1.0 nm. The thicknesses of the Co layers 5 are such that they all exhibit perpendicular magnetic anisotropy (i.e. magnetisation perpendicular to the plane of each layer 5, and a positive value of the total effective anisotropy), and that Formula (2) is valid for this embodiment.

The figure also depicts a glass substrate 11, which is spin-coated with a UV-cured photolacquer layer 13 and a dielectric enhancement layer 15 of AlN. Part $P_1$ of the recording multilayer 3 is vapour-deposited directly onto this dielectric enhancement layer 15, with subsequent vapour-deposition of layer 9 and part $P_2$.

Also schematically depicted are two focused (laser) light beams 17, 19 of equal diameter, wavelength and intensity. These light beams impinge upon the recording multilayer 3 via the substrate 11, and illuminate two distinct data bit domains of the recording multilayer 3. An external magnetic field 21 (the reading field) is applied concurrent to illumination of the medium 1 by the light beams 17,19. Although two light beams 17, 19 are drawn for illustrative purposes, only one light beam is actually required to read data from the medium, or to write data into the medium.

To read existing data bits from the recording multilayer 3, a focused light beam (such as light beam 17 or 19) is employed to thermally weaken the AF coupling across layer 9 within a given domain, without causing substantial thermal demagnetisation of the parts $P_1$ and $P_2$. Under these circumstances, the strength of the magnetic field 21 is thus chosen that it can be used to change the orientations of the magnetisations in part $P_1$ of the heated domain without disturbing the magnetisations in part $P_2$ thereof. A condition for this selective manipulation of magnetisations is that Formula (2) be valid for this embodiment.

In the case of the data bit domain 23 illuminated by the central region of light beam 17, the magnetisations 25 in part $P_2$ are anti-parallel to the magnetic field 21, whereas the magnetisations 27 in part $P_1$ are parallel to the magnetic field 21, so that the total magneto-optical effect from the domain 23 is zero. On the other hand, in the case of the data domain 29 illuminated by the central region of light beam 19, the magnetisations 31 in part $P_2$ are parallel to the magnetic field 21, and the magnetisations 33 in part $P_1$ are reversed by the magnetic field 21 so as to be parallel to it, so that the total magneto-optical effect from the domain 29 is non-zero. These considerations justify the labels "0" and "1" used in Figure 1 to denote the respective data bit domains illuminated by the light beams 17, 19.

The width of the light beams 17, 19 schematically represents the diameter of the Airy disc for the chosen wavelength. The two data bit domains discussed above are each situated within a small central region of this Airy disc, and the intensity of light beams 17, 19 is thus chosen that sufficient thermal weakening of the AF coupling across layer 9 only occurs within this small central region of each Airy disc. For illustrative purposes, an additional data bit domain 35 is represented at the edge of the Airy disc of light beam 19. For this data bit domain 35, the magnetisations 37 in part $P_2$ are oriented parallel to the magnetic field 21, but the AF coupling across layer 9 is insufficiently thermally weakened by the light beam 19 to allow reversal of any of the magnetisations 39 in part $P_1$ by the magnetic field 21. The magnetisations 39 in part $P_1$ therefore remain oppositely oriented to the magnetisations 37 in part $P_2$, so that the total magneto-optical effect in this domain is zero. It is thus seen that, at any one time, only data bit domains within a small central region of the light beam can be read.

Embodiment 2

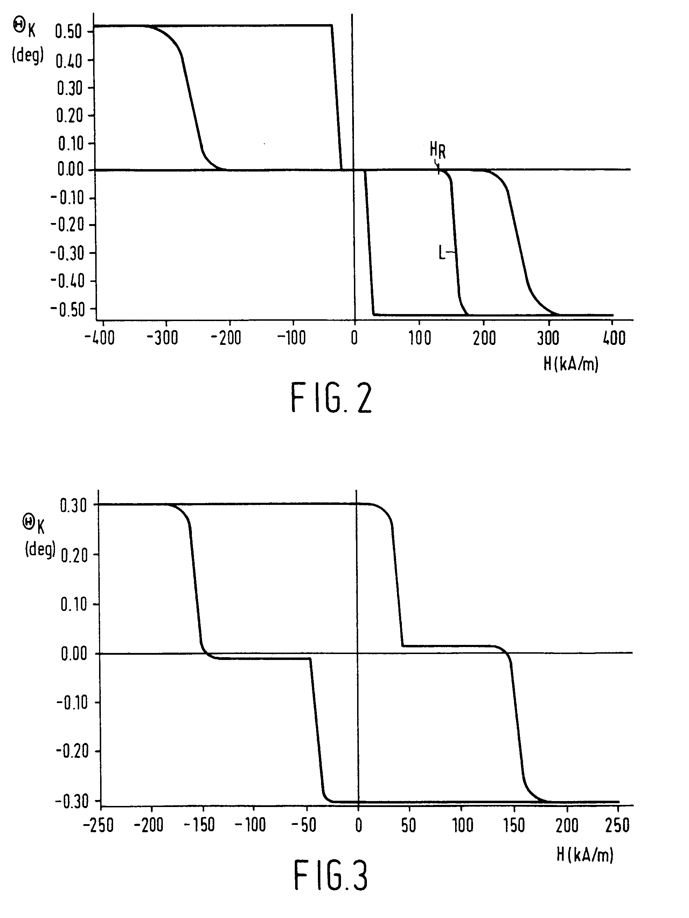

Figure 2 shows a magnetic hysteresis loop measured at room temperature for the particular embodiment of the magneto-optical recording medium detailed in Embodiment 1 and Figure 1. The depicted hysteresis loop is a graph of polar magneto-optical Kerr rotation $\theta_K$ (in degrees) as a function of external polar magnetic field H (in kA/m), whereby the recording medium was irradiated via the substrate using a HeNe gas laser of wavelength 633 nm. At zero external magnetic field, the Kerr rotation is zero, since the relative Kerr rotation contributions from parts $P_1$ and $P_2$ are equal in magnitude but opposite in sign, and thus cancel one another. At external magnetic fields in excess of 350 kA/m, the Kerr rotation has a relatively large value in excess of 0.5 degrees, since the relative Kerr rotation contributions from parts $P_1$ and $P_2$ are equal in magnitude and equal in sign, and thus reinforce one another. The hysteresis loop includes an inner loop L, and a reading field $H_R$ is also depicted.

Embodiment 3.

Figure 3 shows a magnetic hysteresis loop measured at room temperature for a particular embodiment of the magneto-optical recording medium according to the invention, whereby the coupling structure consists of a Pt/Fe/Ru/Fe/Pt layered stack. The depicted hysteresis loop is a graph of polar magneto-optical Kerr rotation $\theta_K$ (in degrees) as a function of external polar magnetic field H (in kA/m), whereby the recording medium was irradiated via the substrate using a solid state semiconductor laser of wavelength 820 nm.
The recording multilayer in this embodiment has the following structure:

- Each layer of the first kind comprises Co, and is 0.31 nm thick;
- Each layer of the second kind comprises Pt, and is 1.0 nm thick;
- The first layer to be deposited on the glass substrate is a Pt layer, followed by a Co layer. Pt and Co layers are subsequently stacked in alternate arrangement until a total of five of each has been deposited. The stack thus ends with a Co layer;
- The coupling structure is subsequently deposited. This is a symmetric structure consisting of 5 layers, each of a single chemical element, namely Pt, Fe, Ru, Fe and Pt, consecutively. The respective thicknesses of the layers are 1.0, 0.45, 0.9, 0.45 and 1.0 nm;
- The coupling structure is covered by a Co layer, followed by a Pt layer. Co and Pt layers are subsequently stacked in alternate arrangement until a total of eight of each has been deposited. The stack thus ends with a Pt layer. An additional protective layer was not necessary.

The thicknesses and pluralities of the various layers in the recording multilayer had not yet been optimised to yield zero total Kerr rotation (for the employed wavelength of 820 nm) at zero applied external field.

Embodiment 4.

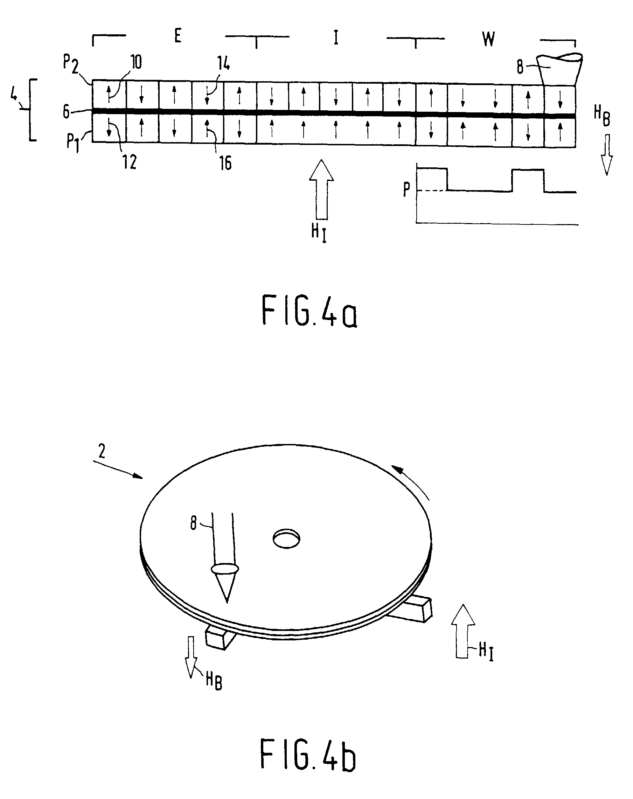

Figure 4 is a schematic representation of a direct overwrite principle which can be employed with a preferential embodiment of the magneto-optical recording medium 2 according to the invention and which does not involve magnetic field modulation.
Figure 4(a) shows a cross section of part of a recording multilayer 4, which recording multilayer 4 is divided into parts $P_1$ and $P_2$ by a coupling structure 6. Also schematically depicted are an initialising magnetic field $H_I$ and a bias magnetic field $H_B$, which fields are oppositely oriented. A laser light beam 8 is used in conjunction with $H_B$ in the writing process.
The depicted part of the recording multilayer 4 is laterally divided into three schematic portions E, I and W, which respectively represent a portion E of existing data, a portion I which has been initialised for writing, and a portion W of newly written data. Within these portions, the arrows 10, 12 and 14, 16 schematically indicate the magnetisation directions in two different data bit domains of the recording multilayer 4. In the case of the portion W, a block graph shows relative values of the intensity P of the laser light beam 8 employed to write the corresponding data bit domains depicted above the graph.
Figure 4(b) shows a perspective view of a possible arrangement for direct overwrite of information into a rotatable disc-shaped magneto-optical recording medium 2 according to the invention, whereby use is made of the direct overwrite principle illustrated in Figure 4(a).

**Claims**

1. Magneto-optical recording medium (1) comprising a substrate (11) and a recording multilayer (3), the recording multilayer (3) having a magnetic easy axis perpendicular to the multilayer (3) and comprising layers of a first kind (5) alternately stacked with layers of a second kind (7), the layers of the first kind (5) substantially comprising Co and the layers of the second kind (7) comprising a metal other than Co, whereby successive layers of the first kind (5) are ferromagnetically coupled across interposed layers of the second kind (7), at least one of the layers of the second kind (7) which is bounded on both sides by layers of the first kind (5) being substituted by a coupling structure comprising at least one layer (9) of antiferromagnetic coupling material, across which coupling structure the immediately adjacent layers of the first kind kind (5) are antiferromagnetically coupled, characterized in that the embodiment of that part P1 of the recording multilayer (3) at one side of the coupling structure and of that part P2 of the recording multilayer (3) at the other side of the coupling structure is such that a first magnetic switching field being applied under thermally weakened antiferromagnetic coupling, for switching magnetisations in part P1 out of anti-parallel orientation with respect to corresponding magnetisations in part P2 and into parallel orientation with respect thereto, is smaller than a second magnetic switching field, for switching magnetisations in part P2 out of anti-parallel orientation with respect to corresponding magnetisations in part P1 and into parallel orientation with respect thereto.

2. Magneto-optical recording medium (1) according to claim 1, characterized in that part P1 and part P2 of the recording medium (1) are thus embodied that a third magnetic switching field, for switching magnetisations in part P1 out of parallel orientation with respect to corresponding magnetisations in part P2 and into anti-parallel orientation with respect thereto, is negative.

3. Magneto-optical recording medium (1) according to claim 1 or 2, characterized in that the Curie temperature of part P1 is larger than the Curie temperature of part P2.

4. Magneto-optical recording medium (1) according to any of the preceeding claims, characterized in that the antiferromagnetic coupling material is selected from the group formed by V, Cr, Mn, Cu, Nb, Mo, Ru, Rh, Ta, W, Re, Os, Ir, and mixtures thereof.

5. Magneto-optical recording medium (1) according to claim 4, characterized in that the coupling structure is a single layer (9) of antiferromagnetic coupling material selected from the group formed by Rh, Ru, and mixtures thereof, which layer (9) has a thickness in the range 0,5 nm - 1,2 nm.

6. Magneto-optical recording medium (1) according to any of the preceeding claims, characterized in that the coupling structure contains at least one layer of ferromagnetic material selected from the group formed by Fe, Ni, Co, and mixtures thereof.

7. Magneto-optical recording medium according to any of the preceeding claims, characterized in that the layers of the second kind (7) contain a material selected from the group formed by Ni, Pd, Pt, Au, and mixtures thereof.

8. A method of reading data bits from a magneto-optical recording medium as claimed in any of the claims 1-7, characterized in that a focussed light beam is used to sufficiently thermally weaken the antiferromagnetic coupling within a given data bit domain to an extent whereby an external magnetic field can be, and is, subsequently used to force the magnetisation within that data bit domain and at one given side of the coupling structure into a certain orientation, without changing the orientation of the magnetisation within that data bit domain and at the other side of the coupling structure, whereby the intensity of the light beam is thus chosen that the said sufficient thermal weakening of the antiferromagnetic coupling only occurs within an area of the focused light beam which is smaller than the Airy disc of the light beam, the configuration of magnetisations in the given data bit domain being derived from analysis of the magneto-optical Kerr effect observed in the light reflected therefrom.

9. A method of directly writing data bits into a magneto-optical recording medium as claimed in any of the claims 1-7, characterized in that a first external magnetic field is employed fo force all magnetisations in a given region of the recording multilayer and at a first side of the coupling structure into a single orientation without disturbing the magnetisations in that same region of the recording multilayer but at the other side of the coupling structure, and a second external magnetic field is subsequently used in conjunction with a focused light beam to thermomagnetically write new data bits into that same region of the recording multilayer, the direction of the second external magnetic field being opposite to that of the first external magnetic field, whereby a first light intensity required to reverse the magnetisation direction solely at the second side of the coupling structure in a given data bit domain of the given region is lower than a second light intensity required to reverse the magnetisation direction at the first side of the coupling structure in a given data bit domain of that region, the intensity of the light beam being modulated in accordance with the information content of the data bits to be written, whereby the value of the light intensity for each such data bit is equal to either the first light intensity or the second light intensity.

**Patentansprüche**

1. Magnetooptisches Aufzeichnungsmedium (1) mit einem Substrat (11) und einer Aufzeichnungsmultischicht (3), wobei diese letztere Schicht (3) eine Achse der einfachen Magnetisierung senkrecht auf der Multischicht (3) hat, und Schichten einer ersten Art (5), im Wesentlichen mit Co, aufweist, die wechselweise mit Schichten einer zweiten Art (7) gestapelt sind, wobei die Schichten der ersten Art im Wesentlichen Co und die Schichten der zweiten Art ein Metall anders als Co enthalten, wobei aufeinanderfolgende Schichten der ersten Art (5) über zwischenliegende Schichten der zweiten Art (7) ferromagnetisch gekoppelt sind, wobei wenigstens eine der Schichten der zweiten Art (7), die auf beiden Seiten durch Schichten der ersten Art (5) begrenzt wird, durch eine Kopplungsstruktur ersetzt sein kann, die wenigstens eine Schicht (9) aus antiferromagnetischem Kopplungsmaterial aufweist, wobei über diese Kopplungsstruktur die unmittelbar angrenzenden Schichten der ersten Art (5) antiferromagnetisch gekoppelt sind, dadurch gekennzeichnet, dass die Ausführung des Teils $P_1$ der Aufzeichnungsmultischicht (3) an der einen Seite der Kopplungsstruktur und die Ausführung des Teils $P_2$ der Aufzeichnungsmultischicht (3) an der anderen Seite der Kopplungsstruktur derart ist, dass ein erstes magnetisches Schaltfeld, das unter thermisch abgeschwächter antiferromagnetischer Kopplung zugeführt wird, zum aus der Antiparallelorientierung Schalten von Magnetisierungen in dem Teil $P_1$ gegenüber entsprechenden Magnetisierungen in dem Teil $P_2$ und zum in Bezug darauf in Parallelorientierung Schalten, kleiner ist als ein zweites magnetisches Schaltfeld zum aus der Antiparalleorientierung Schalten der Magnetisierungen in dem Teil $P_2$ gegenüber entsprechenden Magnetisierungen in dem Teil $P_1$ und zum in Bezug darauf in Parallelorientierung Schalten.

2. Magnetooptisches Aufzeichnungsmedium (1) nach Anspruch 1, dadurch gekennzeichnet, dass der Teil $P_1$ und der Teil $P_2$ des Aufzeichnungsmediums (1) derart ausgebildet sind, dass ein drittes magnetisches Schaltfeld zum Schalten von magnetisierungen in dem Teil $P_1$ aus der Parallelorientierung gegenüber den entsprechenden Magnetisierungen in dem Teil P2 und in die Antiparallelorientierung gegenüber demselben negativ ist.

3. Magnetooptisches Aufzeichnungsmedium (1) nach Anspruch 1 oder 2, dadurch gekennzeichnet, dass die Curie-Temperatur des Teils P1 größer ist als die Curie-Temperatur des Teils P2.

4. Magnetooptisches Aufzeichnungsmedium (1) nach einem der vorstehenden Ansprüche, dadurch gekennzeichnet, dass das antiferromagnetische Kopplungsmaterial selektiert wird aus der Gruppe, bestehend aus V, Cr, Mn, Cu, Nb, Mo, Ru, Rh, Ta, W, Re, Os, Ir und Gemischen daraus.

5. Magnetooptisches Aufzeichnungsmedium (1) nach Anspruch 4, dadurch gekennzeichnet, dass die Kopplungsstruktor eine einzige Schicht (9) aus antiferromagnetischem Kopplungsmaterial ist, selektiert aus der Gruppe, bestehend aus Rh, Ru und Gemischen Daraus, wobei diese Schicht (9) eine Dicke im Bereich von 0,5 nm -1,2 nm hat.

6. Magnetooptisches Aufzeichnungsmedium (1) nach einem der vorstehenden Ansprüche, dadurch gekennzeichnet, dass die Kopplungsstruktur wenigstens eine Schicht aus ferromagnetischem Material aufweist, selektiert aus der Gruppe, bestehend aus Fe, Ni, Co und Gemischen daraus.

7. Magnetooptisches Aufzeichnungsmedium nach einem der vorstehenden Ansprüche, dadurch gekennzeichnet, dass die Schichten der zweiten Art (7) ein Material enthalten, selektiert aus der Gruppe, bestehend aus Ni, Pd, Pt, Au und Gemischen daraus.

8. Verfahren zum Auslesen von Datenbits aus einem magnetooptischen Aufzeichnungsmedium nach einem der Ansprüche 1 bis 7, dadurch gekennzeichnet, dass ein fokussierter Lichtstrahl verwendet wird um die antiferromagnetische Kopplung innerhalb einer bestimmten Datenbitdomäne weit genug abzuschwächen, und zwar derart, dass ein externes Magnetfeld benutzt werden kann und tatsächlich benutzt wird um die Magnetisierung innerhalb dieser Datenbitdomäne und an einer bestimmten Seite der Kopplungsstruktur in eine bestimmte Richtung zu zwingen, ohne Änderung der Orientierung der Magnetisierung innerhalb dieser Datenbitdomäne und auf der anderen Seite der Kopplungsstruktur, wobei die Intensität des Lichtstrahls derart gewählt wird, dass die genannte thermische Abschwächung der antiferromagnetischen Kopplung nur innerhalb eines Gebietes des fokussierten Lichtstrahls auftritt, das kleiner ist als die Airysche Scheibe des Lichtstrahls, wobei die Konfiguration der Magnetisierungen in der bestimmten Datenbitdomäne aus der Analyse des beobachteten magnetooptischen Kerr-Effektes in dem daran reflektierten Licht hergeleitet wird.

**9.** Verfahren zum direkten Schreiben von Datenbits in ein magnetooptisches Aufzeichnungsmedium nach einem der Ansprüche 1 bis 7, dadurch gekennzeichnet, dass ein erstes externes Magnetfeld benutzt wird zum Forcieren aller Magnetisierungen in einem bestimmten Gebiet der Aufzeichnungsmultischicht und an einer ersten Seite der Kopplungsstruktur in eine einzige Orientierung ohne Zerstörung der Magnetisierungen in demselben Gebiet der Aufzeichnungsmultischicht an der anderen Seite der Kopplungsstruktur, und dass ein zweites externes Magnetfeld danach benutzt wird im Zusammenhang mit einem fokussierten Lichtstrahl zum thermischen Einschreiben neuer Datenbits in dieses Gebiet der Aufzeichnungsmultischicht, wobei die Richtung des zweiten externen Magnetfeldes zu der des ersten externen Magnetfeldes entgegengesetzt ist, wobei eine erste Lichtintensität, erforderlich zum Umkehren der Magnetisierungsrichtung nur an der zweiten Seite der Kopplungsstruktur in einer bestimmten Datenbitdomäne des bestimmten Gebietes geringer ist als eine zweite Lichtintensität, erforderlich zum Umkehren der Magnetisierungsrichtung an der ersten Seite der Kopplungsstruktur in einer bestimmten Datenbitdomäne dieses Gebietes, wobei die Intensität des Lichtstrahles entsprechend dem Informationsinhalt der einzuschreibenden Datenbits moduliert wird, wobei der Wert der Lichtintensität für jedes solch Datenbit entweder der ersten Lichtintensität oder der zweiten Lichtintensität entspricht.

## Revendications

**1.** Support d'enregistrement magnéto-optique (1) comprenant un substrat (11) et une multicouche d'enregistrement (3), la multicouche d'enregistrement (3) présentant un axe doux magnétique perpendiculaire à la multicouche (3) et comprenant des couches d'un premier type (5) superposées en alternance avec des couches d'un deuxième type (7), les couches du premier type (5) étant essentiellement composées de Co et les couches du deuxième type (7) comprenant un métal autre que du Co, en sachant que des couches successives du premier type (5) sont couplées de manière ferromagnétique à travers des couches intercalées du deuxième type (7), au moins l'une des couches du deuxième type (7) qui est délimitée des deux côtés par des couches du premier type (5) étant substituée par une structure de couplage comprenant au moins une couche (9) de matériau de couplage antiferromagnétique, structure de couplage à travers laquelle les couches du premier type (5) à proximité immédiate sont couplées de manière antiferromagnétique, caractérisé en ce que la forme de réalisation de cette partie P1 de la multicouche d'enregistrement (3) d'un côté de la structure de couplage et de cette partie P2 de la multicouche d'enregistrement (3) de l'autre côté de la structure de couplage est telle qu'un premier champ de commutation magnétique, appliqué sous un couplage antiferromagnétique affaibli thermiquement pour commuter des magnétisations dans la partie P1 hors d'une orientation antiparallèle par rapport à des magnétisations correspondantes dans la partie P2 et dans une orientation parallèle par rapport à celles-ci, est inférieur à un deuxième champ de commutation magnétique, pour commuter des magnétisations dans la partie P2 hors d'une orientation antiparallèle par rapport à des magnétisations correspondantes dans la partie P1 et dans une orientation parallèle par rapport à celles-ci.

**2.** Support d'enregistrement magnéto-optique (1) suivant la revendication 1, caractérisé en ce que la partie P1 et la partie P2 du support d'enregistrement (1) sont réalisées de sorte qu'un troisième champ de commutation magnétique, pour commuter les magnétisations dans la partie P1 hors d'une orientation parallèle par rapport aux magnétisations correspondantes dans la partie P2 et dans une orientation antiparallèle par rapport à celles-ci, est négatif.

**3.** Support d'enregistrement magnéto-optique (1) suivant la revendication 1 ou 2, caractérisé en ce que la température de Curie de la partie P1 est supérieure à la température de Curie de la partie P2.

**4.** Support d'enregistrement magnéto-optique (1) suivant l'une quelconque des revendications précédentes, caractérisé en ce que le matériau de couplage antiferromagnétique est sélectionné dans le groupe composé du V, du Cr, du Mn, du Cu, du Nb, du Mo, du Ru, du Rh, du Ta, du W, du Re, de l'Os, de l'Ir et des mélanges des ceux-ci.

**5.** Support d'enregistrement magnéto-optique (1) suivant la revendication 4, caractérisé en ce que la structure de couplage est une seule couche (9) de matériau de couplage antiferromagnétique sélectionné dans le groupe composé du Rh, du Ru et des mélanges de ceux-ci, laquelle couche (9) présente une épaisseur comprise dans la plage de 0,5 nm à 1,2 nm.

**6.** Support d'enregistrement magnéto-optique (1) suivant l'une quelconque des revendications précédentes, caractérisé en ce que la structure de couplage contient au moins une couche de matériau ferromagnétique sélectionné dans le groupe composé du Fe, du Ni, du Co et des mélanges de ceux-ci.

**7.** Support d'enregistrement magnéto-optique suivant l'une quelconque des revendications précédentes, caractérisé en ce que les couches du deuxième type (7) contiennent un matériau sélectionné dans le groupe composé du Ni, du Pd, du Pt, de l'Au, et des mélanges de ceux-ci.

**8.** Procédé de lecture de bits de données à partir d'un support d'enregistrement magnéto-optique suivant l'une quelconque des revendications 1 à 7, caractérisé en ce qu'un faisceau lumineux focalisé est utilisé pour affaiblir suffisamment sur le plan thermique le couplage antiferromagnétique à l'intérieur d'un domaine de bits de données donné dans une mesure telle qu'un champ magnétique externe peut être, et est, par la suite utilisé pour forcer la magnétisation à l'intérieur de ce domaine de bits de données et, sur un côté donné de la structure de couplage, dans une certaine orientation, sans modifier l'orientation de la magnétisation à l'inténeur de ce domaine de bits de données et, de l'autre côté de la structure de couplage, en sachant que l'intensité du faisceau lumineux est choisie de manière à ce que ledit affaiblissement thermique suffisant du couplage antiferromagnétique ne se produise que dans une zone du faisceau lumineux focalisé qui est inférieure au disque Airy du faisceau lumineux, la configuration des magnétisations dans le domaine de bits de données donné étant dérivée de l'analyse de l'effet Kerr magnéto-optique observé dans la lumière réfléchie depuis celui-ci.

**9.** Procédé pour écrire directement des bits de données dans un support d'enregistrement magnéto-optique suivant l'une quelconque des revendications 1 à 7, caractérisé en ce qu'un premier champ magnétique externe est utilisé pour contraindre toutes les magnétisations dans une région donnée de la multicouche d'enregistrement et d'un premier côté de la structure de couplage dans une seule orientation sans perturber les magnétisations dans cette même région de la multicouche d'enregistrement mais de l'autre côté de la structure de couplage, et un deuxième champ magnétique externe est ensuite utilisé en conjonction avec un faisceau lumineux focalisé pour écrire de manière thermomagnétique de nouveaux bits de données dans cette même région de la multicouche d'enregistrement, la direction du deuxième champ magnétique externe étant opposée à celle du premier champ magnétique externe, en sachant qu'une première intensité lumineuse nécessaire pour inverser la direction de magnétisation uniquement du deuxième côté de la structure de couplage dans un domaine de bits de données donné dans la région donnée est inférieure à une deuxième intensité lumineuse nécessaire pour inverser la direction de magnétisation du premier côté de la structure de couplage dans un domaine de bits de données donné de cette région, l'intensité du faisceau lumineux étant modulée suivant le contenu informationnel des bits de données à écrire, en sachant que la valeur de l'intensité lumineuse pour chaque bit de données de ce type est égale soit à la première intensité lumineuse, soit à la deuxième intensité lumineuse.

FIG. 1

FIG. 2

FIG. 3

## FIG.4a

## FIG.4b